(19) Europäisches Patentamt
European Patent Office
Office européen des brevets

(11) **EP 1 973 045 A1**

(12) **EUROPEAN PATENT APPLICATION**

(43) Date of publication:
**24.09.2008 Bulletin 2008/39**

(51) Int Cl.:
**G06F 17/30** *(2006.01)*

(21) Application number: **07251152.0**

(22) Date of filing: **20.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: British Telecommunications
**Public Limited Company**
**London**
**EC1A 7AJ (GB)**

(72) Inventor: **The designation of the inventor has not yet been filed**

(74) Representative: **Lloyd, Barry George William et al**
**BT Group Legal**
**Intellectual Property Department**
**PP C5A**
**BT Centre**
**81 Newgate Street**
**London EC1A 7AJ (GB)**

(54) **Organising and storing documents**

(57)     A data handling device has access to a store of existing metadata pertaining to existing documents having associated metadata terms. It selects metadata assigned to documents deemed to be of interest to a user and analyses the metadata to generate statistical data as to the co-occurrence of pairs of terms in the metadata of one and the same document. When a fresh document is received, it is analysed to assign to it a set of terms and determine for each a measure of their strength of association with the document. Then, a score is generated for the document, for each term of the set, the score being a monotonically increasing function of (a) the strength of association with the document and of (b) the relative frequency of co-occurrence of that term and another term that occurs in the set. The score represents the relevance of the document to the users and can be used (following comparison with a threshold, or with the scores of other such documents) to determine whether the document is to be reported to the user, and/or retrieved.

Figure 1

## Description

This application is concerned with organising and storing documents for subsequent retrieval.

According to the present invention there is provided a data handling device for organising documents, the documents having associated metadata terms, the device comprising:

means providing access to a store of existing metadata;

means operable to select from the existing metadata items assigned to documents deemed to be of interest to a user and to generate for each of one of more terms occurring in the selected metadata values indicative of the frequency of co-occurrence of that term a respective other term in the metadata of one and the same document;

means for analysing a fresh document to assign to it a set of terms and determine for each a measure of their strength of association with the document; and

means operable to determine, for the fresh document, for each term of the set a score that is a monotonically increasing function of (a) the strength of association with the document and of (b) the relative frequency of co-occurrence, in the selected existing metadata, of that term and another term that occurs in the set.

Other aspects of the invention are defined in the claims.

One embodiment of the invention will now be further described, by way of example, with reference to the accompanying drawings, in which:

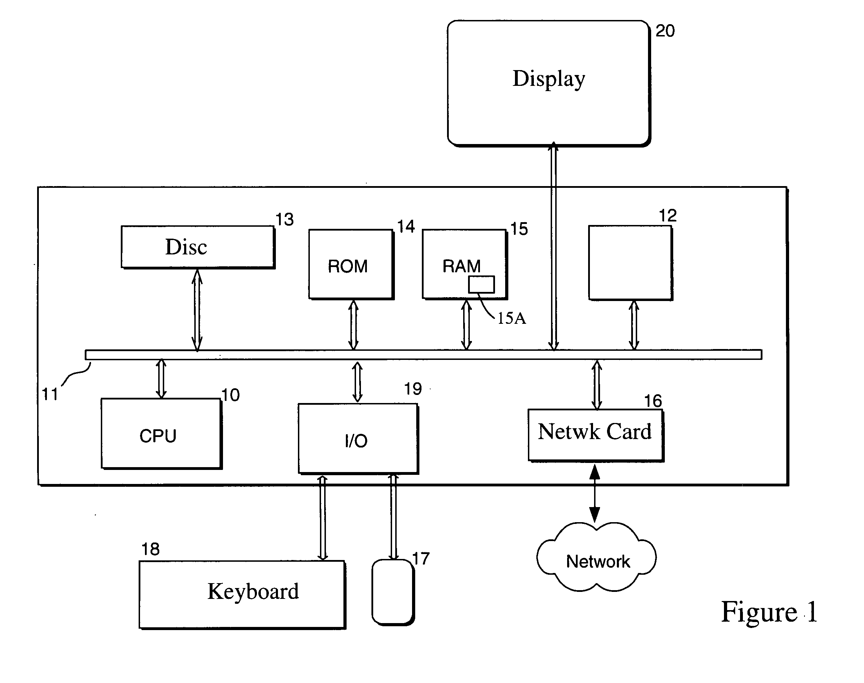

Figure 1 is a schematic diagram of a typical architecture for a computer on which software implementing the invention can be run.

Figure 1 shows the general arrangement of a document storage and retrieval system, implemented as a computer controlled by software implementing one version of the invention. The computer comprises a central processing unit (CPU) 10 for executing computer programs, and managing and controlling the operation of the computer. The CPU 10 is connected to a number of devices via a bus 11. These devices include a first storage device 12, for example a hard disk drive for storing system and application software, a second storage device 13 such as a floppy disk drive or CD/DVD drive, for reading data from and/or writing data to a removable storage medium, and memory devices including ROM 14 and RAM 15. The computer further includes a network card 16 for interfacing to a network. The computer can also include user input/output devices such as a mouse 17 and keyboard 18 connected to the bus 11 via an input/output port 19, as well as a display 20. The architecture described herein is not limiting, but is merely an example of a typical computer architecture. It will be further understood that the described computer has all the necessary operating system and application software to enable it to fulfil its purpose.

The system serves to handle documents in text form, or at least, in a format which includes text. In order to facilitate searching for retrieval of documents, the system makes use of a set of controlled indexing terms. Typically this might be a predefined set of words and/or phrases that have been selected for this purpose. The INSPEC system uses just such a set. The INSPEC Classification and Thesaurus are published by the Institution of Engineering and Technology. The system moreover presupposes the existence of an existing corpus of documents that have already been classified - perhaps manually - against the term set (of the controlled language). Each document has metadata comprising a list of one of more terms that have been assigned to the document (for example, in the form of a bibliographic record from either INSPEC or ABI). The system requires a copy of this metadata and in this example this is stored in an area 15A of the RAM 15, though it could equally well be stored on the hard disk 12 or on a remote server accessible via the network interface 16. It does not necessarily require access to the documents themselves.

Broadly, the operation of the system comprises four phases:

(i) Initial training, analysing the pre-existing metadata (controlled indexing terms);

(ii) processing of a new, unclassified document to identify an initial set of terms and their strength of association with the document;

(iii) refinement of the term allocation to generate the metadata for the new document, making use of the results of the training.

(iv) searching among the metadata (including the newly-generated metadata) for documents matching desired search criteria.

## Training

1.1 The training process analyses the existing metadata, to generate a set of co-occurrence data for the controlled indexing terms. In this description, references to a document having a term assigned to it mean that that term appears in the metadata for that document. The co-occurrence data for each controlled indexing term can be expressed as a vector which has an element for every term, each element being a weight indicative of the frequency of co-occurrence of that controlled indexing term and the head term (that is to say, the controlled indexing term for which the vector is generated). More particularly, the weight is the number of documents that have been assigned both controlled indexing terms, divided by the total number of documents to which the head term has been assigned.

In mathematical terms, the vector $\mathbf{V}_i$ for term i can be expressed as:

$$\mathbf{V}_i = \{v_{ij}\}, \quad i = 1 \dots N$$

where

$$v_{ij} = \frac{c_{ij}}{c_{ii}}$$

where $c_{ij}$ is the number of training documents each having both term *i* and term *j* assigned to it, and the vector has N elements, where N is the number of index terms.

Actually the term $v_{ii}$ is always unity and can be omitted. Moreover, in practice, there are likely to be a large number of index terms, so that the vast majority of elements will be zero and we prefer not to store the zero elements but rather to use a concise representation in which the data are stored as an array with the names of the nonzero terms and their values alongside. Preferably these are stored in descending order of weight.

1.2 Optionally, each vector is subjected to a further stage (vector intersection test) as follows:

- for each term listed in the vector, compare the vector for the listed term with the vector under consideration to determine a rating equal to the number of terms appearing in both vectors. In the prototype, this was normalised by division by 50 (an arbitrary limit placed on the maximum size of the vector); however we prefer to divide by half the sum of the number of nonzero terms in the two vectors.
- delete low-rating terms from the vector (typically, so that a set number remain).

**Analyse New Document**

A new document (e.g. a web page) is to be classified. It is firstly analysed to identify an initial set of terms and their strength of association with the document. There are a number of ways of doing it: the simplest method, which can be used where the predetermined set of terms is such that there is strong probability that the terms themselves will occur in the text of a relevant document is (2.1) to search the document for occurrences of indexing terms, and produce a list of terms found, along with the number of occurrences of each.

The result can be expressed as $\mathbf{R} = \{r_k\}_{k=1\dots N}$ where $r_k$ is the number of occurrences of term k in the new document, although again, in practice a more concise representation is preferred.

**Refinement**

Rather than simply choose, as the metadata, the terms of R that occur most frequently in the document, the object here is to determine for each term that is present in the document a score that not only reflects the frequency of that term in the document but also takes account of the co-occurrence statistics obtained in the training phase. In effect, the aim is to boost the scores for those terms which the vectors show to have been seen in the past in company with other indexing terms also found in the unknown document. This process proceeds as follows:

3.1 Take the first term $r_i$ of the list and retrieve its vector.

3.2 Determine which terms occur in both the list and the vector.

3.3 Calculate a score:

s = *topicfrequency* \* sqrt(vectorlength)\*(1 +$log_e$(#topicwords))\*extrastrength
where
*topicfrequency* is the number of occurrences $r_k$ of this first term in the document *vectorlength* is the number of terms identified at step 3.2.

*#topicwords* is the number of words making up this first term

and *extrastrength* is the sum of the square roots of the vector weights for the terms identified in step 3.2.

If desired, *extrastrength* might also take into account the numbers of occurrences of the various terms in the document.

3.4 Repeat steps 3.2 and 3.3 for each of the other terms in the list.

3.5 Choose the highest-scoring term (or terms, up to some desired maximum number of terms) as the terms to be included in the metadata for this document.

In terms of the previous mathematical representation, this process may be expressed as:

```
Compute score sₖ for each term in the document

For k = 1 to N

        IF rₖ = 0 THEN sₖ = 0 GOT skip

vectorlength = 0

extrastrength =1

FOR p=1 TO N

IF rₚ ≠ 0 AND vₖₚ ≠ 0 THEN

    vectorlength = vectorlength + 1

                extrastrength = extrastrength + SQRT(vₖₚ)

            END IF

        NEXT p

sₖ = rₖ *SQRT(vectorlength)*(1 + log(#topicwords))*extrastrength

skip:

NEXT k
```

The index terms are those having the largest values of $s_k$.

Once the metadata have been generated, then the new document can be added to the existing store of documents (or to a separate one) and the metadata stored similarly. The new document is then available to be retrieved by the fourth, searching step, which can be performed in a conventional manner.

In implementing such a system, there is design choice to be made, as to whether the automatically-generated metadata are to be available for subsequent analyses for the purpose of generating the weight vectors, or whether the designer prefers not to take the risk that errors in automatically generated metadata may propagate to reduce the efficacy of subsequent generations of metadata. In the latter case, the automatically stored metadata should be stored separately, or flagged appropriately, to prevent its use for this purpose whilst allowing it to remain available for searching purposes.

**VARIATIONS**

As described above, scores are generated only for terms found in the preceding analysis step. To accommodate the possibility that a controlled term might be suitable but not be found at this stage, it is possible to deduce its suitability by observing that its vector contains high weightings for terms that are found in (or otherwise associated with) the document. Thus, in a modification, steps 3.1 to 3.3 are performed for every one of the N terms. The formula for *s* is unchanged except that *topicfrequency* is set to 1.0 instead of its true value of zero.

In the example given above, the initial assignment of terms to the new document was performed simply by searching for instances of the terms in the document. An alternative approach - which will work (inter alia) when the terms themselves are not words at all (as in, for example, the International Patent Classification, where controlled terms like H04L12/18, or G10F1/01, are used) - is to generate vectors indicating the correlation between free-text words in the documents and then use these to translate a set of words found in the new document into controlled indexing terms. Such a method is described by Christian Plaunt and Barbara A. Norgard, "An Association-Based Method for Automatic Indexing with a Controlled Vocabulary", Journal of the American Society of Information Science, vol. 49, no. 10, (1988), pp. 888-902. There, they use the INSPEC abstracts and indexing terms already assigned to them to build a table of observed probabilities, where each probability or weight is indicative of the probability of co-occurrence in a document of a pair consisting of (a) a word (uncontrolled) in the abstract or title and (b) an indexing term. Then, having in this way learned the correlation between free-text words and the indexing terms, their system searches the unclassified document for words that occur in the table and uses the weights to translate these words into indexing terms. They create for the $i$th document a set of scores $x_{ij}$ each for a respective indexing term $j$, where the $x_{ij}$ is the sum of the weight for each pair consisting of a word found in the document and term j.

These methods can also be applied to documents that are not text documents - for example visual images. In that case, the first step, of analysing the existing metadata, is unchanged. The step of analysing the documents can be performed by using known analysis techniques appropriate to the type of document (e.g. an image recognition system) to recognise features in the document and their rate of occurrence. The Plaunt et al correlation may them be used to translate these into controlled terms and accompanying frequencies, followed by the refinement step just as described above.

We now turn to the description of a second embodiment of the invention. The objective here is different. Whereas in the first embodiment the object of the exercise was to assign metadata to a newly-received document, here it is to generate a "user profile" and to analyse new documents to determine whether they are of interest to the user. This objective is known - many knowledge management systems use profiles of user interests for the purposes of pushing information to users (or filtering information for users). User profilers can also be used in collaborative systems to find other users with similar interests. The following URL shows how term co-occurrence has been used as a means to suggest search terms: http://delivery.acm.org/10.1145/230000/226956/p126-schatz.pdf?key1 =226956&key2=965034241 1&coll=GUIDE&dl=GUIDE&CFID=673714 51&CFTOKEN=68542650. General information on the use of user profiles: http://libres.curtin.edu.au/libre6n3/micco 2.htm. See also our US patents 5,931,907 and 6,289,337, which detail the use of a user profile in knowledge management systems.

As before, a data handling device has access to a store of existing metadata pertaining to existing documents, and each existing document has an associated set of metadata And as before, the system analyses the metadata to generate co-occurrence vectors. In this case, however, the metadata analysed are only those of documents known to be of interest to the user - e.g. documents the user has previously accessed.

Once the co-occurrence vectors have been generated, these form the user profile for the particular user. Thus, the co-occurrence of controlled indexing terms that are associated with a set of bibliographic records are used to construct weighted vectors of co-occurring indexing terms. The degree of co-occurrence gives a measure of the relative closeness between indexing terms. These vectors can then be used to represent topics of interests in a user profile. Each vector can be weighted to represent a level of interest in that topic.

Many bibliographic records are described by a set of uncontrolled indexing terms. The co-occurrence of these uncontrolled indexing terms with the controlled indexing terms can be used to create weighted vectors of co-occurring uncontrolled indexing terms, and such vectors can also be used for the purposes of representing interests in a user profile. Thus, optionally, the analysis may also extract uncontrolled terms from the text, and the co-occurrence vectors may contain elements for uncontrolled terms too. However, the head terms are controlled terms.

Once the user profile has been set up, content (e.g. Web pages, RSS items) can be analysed for occurrences of any controlled or uncontrolled indexing terms (subjects) and compared with interests in the user profile (each interest is represented as a set of co-occurrence vectors). Content (e.g. Web pages, email, news items) can then be then filtered (or pushed), based on the occurrences of the controlled indexing terms in the text and the presence of controlled indexing term vectors in the user profile.

When a new document is to be evaluated (either because the document has been received, or because it is one of a number of documents being evaluated as part of a search), the document is analysed and controlled terms (and, optionally, uncontrolled terms) are generated. A score is generated for the document, for each head term, using the terms from the new document and the co-occurrence vectors. Specifically, if a head term is h and another term is j and the co-occurrence vector element corresponding to the co-occurrence of terms h and j is $X_{hj}$; and if the number of occurrences of term j in the document is $n_j$, then the score is $s_h = \sum_{All\ j} x_{hj} n_j$ .

Consider the following example. Assume a user has the following interests: 'Knowledge management', 'Mobile communications systems' and 'Land mobile radio'. That is to say, these are three of the head terms with vectors featuring in the user profile. Suppose they are represented by the following (simplified) interest vectors:

- Knowledge management: 0.5 organisational aspects, 0.25 internet, 0.2 innovation management + other weighted terms.
- Mobile communications systems: 0.3 phase shift keying, 0.2 cellular radio, 0.2 fading channel, 0.1 fading, 0.1 antennas + other weighted terms.

- Land mobile radio: 0.4 code division multiple access, 0.2 fading, 0.2 radio receivers + other weighted terms.

Assume that the unseen text is:

"Consider a multiple-input multiple-output (MIMO) <u>fading channel</u> in which the <u>fading</u> process varies slowly over time. Assuming that neither the transmitter nor the receiver have knowledge of the fading process, do multiple transmit and receive antennas provide significant capacity improvements at high signal-to-noise ratio (SNR)? ....."

The word <u>fading</u> occurs twice, the phrase <u>fading channel</u> occurs once, and the word <u>antennas</u> occurs once.

1) None of these terms match terms phrases in the 'Knowledge management vector', so it receives a score of 0.0.

2) The following terms match the 'Mobile communications systems' vector: 'fading channel', 'fading', and 'antennas'. Algorithm would give a score of: [0.1 * 2] (for the term 'fading') + [0.2 * 1] (for the phrase 'fading channel') + [0.1 * 1] (for the phrase 'antennas') = 0.5

3) The following term matches the 'Land mobile radio' vector: 'fading'. Algorithm would give a score of: [0.2 * 1] = 0.2

The unseen document therefore matches against the user interests: 'Mobile communications systems' and 'Land mobile radio'.

Of course, the matching algorithm could be any variation on well known vector similarity measures.

Once the scores have been generated, It can be determined whether the document is or is not deemed to be of interest to the user (and, hence, to be reported to the user, or maybe retrieved) according to whether the highest score assigned to the document does or does not exceed a threshold (or exceeds the scores obtained for other such documents). Likewise, the document can be categorised as falling within a particular category or categories) of interest according to which head terms obtain the highest score(s).

There is also a potential benefit in filtering an article against controlled terms where the terms in the associated vector do not occur in the document, but where that vector has other terms in common with other vectors that do have terms present in the target document. The advantage of using co-occurrence statistics is that it should lead to a more relevant match of information to a user's interests (the analysis is based on the co-occurrence of terms selected by information scientists as being relevant to the article, rather than based on the "bag of words" which comprise the article). The potential benefit of using the uncontrolled indexing terms is that they are more likely to occur in content than some of the more specific controlled indexing terms. Also, note that these vectors can be constructed from a controlled vocabulary associated with other media, it does not necessarily have to be text.

**Claims**

1. A data handling device for organising documents, the documents having associated metadata terms, the device comprising:

   means providing access to a store of existing metadata;
   means operable to select from the existing metadata items assigned to documents deemed to be of interest to a user and to generate for each of one of more terms occurring in the selected metadata values indicative of the frequency of co-occurrence of that term a respective other term in the metadata of one and the same document;
   means for analysing a fresh document to assign to it a set of terms and determine for each a measure of their strength of association with the document; and
   means operable to determine, for the fresh document, for each term of the set a score that is a monotonically increasing function of (a) the strength of association with the document and of (b) the relative frequency of co-occurrence, in the selected existing metadata, of that term and another term that occurs in the set.

2. A data handling device according to claim 1, comprising for the generation of the co-occurrence values, generating for each term a set of weights, each weight indicating the number of documents that have been assigned both the term in question and a respective other term, divided by the total number of documents to which the term in question has been assigned.

3. A data handling device according to claim 1 or 2, in which the terms are terms of a predetermined set of terms.

**4.** A data handling device according to claim 1 or 2, in which each term for which a set of co-occurrence values is generated is a term of a predetermined set of terms, but some at least of the values are values indicative of the frequency of co-occurrence of the term in question and a respective other term which is not a term of the predetermined set.

**5.** A data handling device according to any one of claims 1 to 4, in which the terms are words or phrases and the strength of association determined by the document analysis for each term is the number of occurrences of that term in the document.

**6.** A method of organising documents, the documents having associated metadata terms, the method comprising:

providing access to a store of existing metadata;
selecting from the existing metadata items assigned to documents deemed to be of interest to a user and generating for each of one of more terms occurring in the selected metadata values indicative of the frequency of co-occurrence of that term a respective other term in the metadata of one and the same document;
analysing a fresh document to assign to it a set of terms and determine for each a measure of their strength of association with the document; and
determining, for the fresh document, for each term of the set a score that is a monotonically increasing function of (a) the strength of association with the document and of (b) the relative frequency of co-occurrence, in the selected existing metadata, of that term and another term that occurs in the set.

**7.** A method according to claim 6, comprising for the generation of the co-occurrence values, generating for each term a set of weights, each weight indicating the number of documents that have been assigned both the term in question and a respective other term, divided by the total number of documents to which the term in question has been assigned.

**8.** A method according to claim 6 or 7, in which the terms are terms of a predetermined set of terms.

**9.** A method according to claim 6 or 7, in which each term for which a set of co-occurrence values is generated is a term of a predetermined set of terms, but some at least of the values are values indicative of the frequency of co-occurrence of the term in question and a respective other term which is not a term of the predetermined set.

**10.** A method according to any one of claims 6 to 9, in which the terms are words or phrases and the strength of association determined by the document analysis for each term is the number of occurrences of that term in the document.

**11.** A method according to any one of claims 6 to 10, including comparing the score with a threshold and determining whether the document is to be reported and/or retrieved.

**12.** A method according to any one of claims 6 to 11, including analysing a plurality of said fresh documents and determining a score for each, and analysing the scores to determine which of the documents is/are to be reported and/or retrieved.

Figure 1

EP 1 973 045 A1

**European Patent Office**

## EUROPEAN SEARCH REPORT

Application Number

EP 07 25 1152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 404 514 A (KAGENECK KARL-ERBO G [US] ET AL) 4 April 1995 (1995-04-04) * the whole document * ----- | 1-12 | INV. G06F17/30 |
| A | SALTON G ET AL: "TERM-WEIGHTING APPROACHES IN AUTOMATIC TEXT RETRIEVAL" INFORMATION PROCESSING & MANAGEMENT, ELSEVIER, BARKING, GB, vol. 24, no. 5, 1988, pages 513-523, XP000716208 ISSN: 0306-4573 * the whole document * ----- | 1-12 | |
| A | US 6 411 962 B1 (KUPIEC JULIAN M [US]) 25 June 2002 (2002-06-25) * figure 4 * ----- | | |

TECHNICAL FIELDS SEARCHED (IPC)

G06F

The present search report has been drawn up for all claims

| Place of search | Date of completion of the search | Examiner |
|---|---|---|
| Munich | 15 June 2007 | Hauck, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 25 1152

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2007

| Patent document cited in search report | | Publication date | Patent family member(s) | Publication date |
|---|---|---|---|---|
| US 5404514 | A | 04-04-1995 | NONE | |
| US 6411962 | B1 | 25-06-2002 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5931907 A

- US 6289337 A

**Non-patent literature cited in the description**

- **CHRISTIAN PLAUNT ; BARBARA A. NORGARD.** An Association-Based Method for Automatic Indexing with a Controlled Vocabulary. *Journal of the American Society of Information Science,* 1988, vol. 49 (10), 888-902